# DEMANDE DE BREVET EUROPEEN

(11) **EP 0 593 374 A1**
(43) Date de publication de la demande: **20.04.1994**
(21) Numéro de dépôt: 93430013.8
(22) Date de dépôt: 12.10.1993
(51) Int. Cl.: B65G 47/38, B65G 17/16

(54) **Godet pour système de tri ou de manutention**

(30) Priorité: 13.10.1992 FR 9212614
(71) Demandeur: B+ DEVELOPMENT, F-13420 Gemenos (FR)
(72) Inventeur: Brechet, Michel, c/o B+, F-13420 Gemenos (FR)

(57) **Abrégé**

L'invention concerne un godet susceptible d'équiper un système de tri ou de manutention permettant de manutentionner et de trier avec douceur et précision des objets de faible tenue mécanique (fragiles, mous, non emballé, etc...).

Il est constitué de deux demi-godets (11, 12) pivotant autour de l'axe d'entraînement du système de tri ou de manutention lors de l'ouverture du godet sur action d'un disposition de déclenchement (31) grâce à l'action des contrepoids (21, 22), permettant la libération à destination de l'objet qu'il contient et ce, selon une assiette horizontale, cette dernière étant conservée par le godet quelles que soient l'orientation et l'inclinaison de ladite chaîne dans un plan vertical.

Le dispositif selon l'invention est particulièrement destiné aux systèmes de tri ou de manutention d'objets de faible tenue mécanique.

## Description

La présente invention est relative à un godet susceptible d'équiper un système de tri ou de manutention d'objets divers.

Le domaine technique de l'invention est celui des systèmes de tri ou de manutention.

La présente invention est plus particulièrement relative aux godets servant de réceptacles, dans les systèmes de tri ou de manutention, aux objets à manutentionner et à trier.

On connaît les systèmes de manutention et de tri dont les réceptacles peuvent être :
- des plateaux
- des bacs à deux, trois, quatre ou cinq faces fixes
- des convoyeurs à tapis, à rouleaux ou encore à bandes, équipés de déviateurs
- etc...

On connaît également les réceptacles à fonds mobile dont les deux volets du fond pivotent autour de deux axes parallèles, libérant les deux volets vers le bas et, en conséquence, l'objet qu'ils portaient à destination par chute gravitaire.

Les différents réceptacles connus à ce jour présentent un certain nombre d'inconvénients.

En effet, les plateaux, bacs, convoyeurs, etc... font subir aux objets quelques traumatismes (chutes, accélérations, glissades, etc...) que certains objets ne peuvent pas toujours subir de par leur faible tenue mécanique (Exemples : objets textiles, fragiles ou mous, non emballés, etc...).

De même, les réceptacles à fonds mobiles présentent l'inconvénient d'imposer aux articles une chute au moins égale à la somme de la hauteur du volet (une fois ouvert) et de la hauteur de l'objet lui-même.

Le problème posé consiste donc à équiper les systèmes de tri et de manutention de réceptacles permettant de traiter des objets à faible tenue mécanique sans les traumatiser et en particulier en évitant qu'ils chutent à destination sur une trop grande hauteur.

La solution du problème posé consiste donc à utiliser un réceptacle dont l'ouverture à destination s'effectue autour de son axe de fixation sur la chaîne d'entraînement du système de tri ou de manutention, cette ouverture s'effectuant à destination, grâce à l'activation d'un déclencheur, sous l'impulsion de diverses forces dont la force gravitaire, accompagnée ou non d'autres forces de nature différente telle qu'élastique, hydraulique, pneumatique, etc...

Avantageusement, un tel godet permettra la libération de l'objet à destination en limitant la hauteur de chute minimale à la seule hauteur de l'objet libéré selon une assiette horizontale.

Cet avantage permettra de déposer l'objet trié à destination avec une douceur et une précision accrues et en particulier autorisera l'empilage d'objets empilables tels que des brochures ou des livres par exemple.

Les nombreux avantages procurés par l'invention seront mieux compris au travers de la description suivante qui se réfère aux dessins annexés qui illustrent, sans aucun caractère limitatif, des modes particuliers de réalisation d'un godet selon l'invention.

La figure 1 est un schéma mettant en évidence les différents sous-ensembles qui constituent le godet selon l'invention.

La figure 2 illustre le dispositif de déclenchement et de libération de l'objet trié à destination.

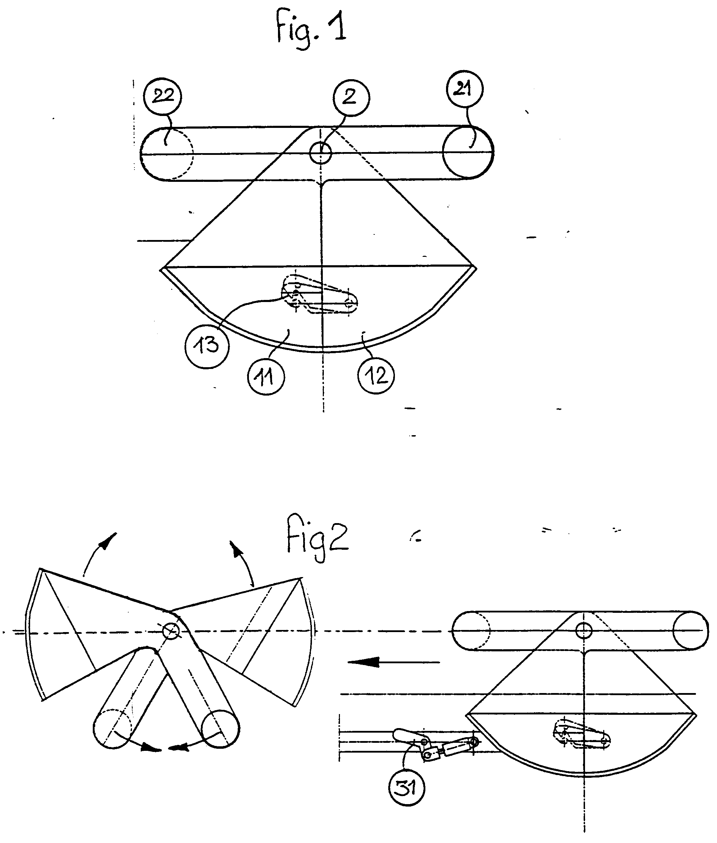

Comme illustré sur la figure 1, dans un mode préférentiel de réalisation de l'invention, le godet 1 est formé de deux parties, les demi-godets 11 et 12 qui pivotent l'un et l'autre autour de l'axe 2 de fixation du godet sur la chaîne d'entraînement du système de tri ou de manutention.

Les deux demi-godets 11 et 12 sont normalement verrouillés l'un et l'autre par le crochet 13 dont le déverrouillage (cf figure 2) entraîne l'ouverture du godet par un déclencheur (31) et la libération de l'objet contenu à destination.

Cette ouverture est assurée gravitairement par les contrepoids 21 et 22 solidarisés à chacun des deux demi-godets 11 et 12. Elle pourra être assistée par d'autres forces telles qu'élastique, hydraulique, pneumatique etc...

La figure 2 met en évidence le dispositif de déclenchement 31, représenté dans un mode préférentiel de réalisation de l'invention, ainsi que l'ouverture progressive du godet et la libération conséquente de l'objet à sa destination.

On notera en particulier que les deux demi-godets pivotant autour de l'axe 2 de fixation du godet s'effacent et ainsi réduisent au minimum la hauteur de chute de l'objet.

On notera également que l'objet est ainsi libéré selon une assiette horizontale pour chuter selon une hauteur minimale lui permettant d'être déposé à destination avec douceur et précision.

On notera enfin que le godet grâce à son pivotement autour de l'axe 2 de fixation à la chaîne d'entraînement du système de tri ou de manutention conservera, par gravité, constamment son assiette horizontale quelles que soient l'orientation et l'inclinaison de ladite chaîne dans un plan vertical.

## Revendications

1. Godet (1) pour système de tri et de manutention caractérisé en ce qu'il est formé de deux demi-godets (11, 12) qui pivotent lors de leur ouverture autour de l'axe (2) de fixation du godet sur la chaîne d'entraînement du système de tri, cette ouverture étant réalisée, sur action du dispositif de déclenchement (31) grâce à la libération des forces gravitaires liées aux contrepoids (21, 22) assistés ou non par d'autres forces telles qu'élastique, hydraulique, pneumatique etc...

2. Godet selon la revendication 1 caractérisé en ce qu'il permet la libération à destination de l'objet qu'il contient selon un assiette horizontale pour chuter selon une hauteur minimale lui permettant d'être déposé à destination avec douceur et précision.

3. Godet selon l'une quelconque des revendications 1 et 2 caractérisé en ce que pivotant autour de l'axe (2) de fixation à la chaîne d'entraînement du système de tri ou de manutention, lequel axe est disposé perpendiculairement à l'axe de déplacement de ladite chaîne, conservera, par gravité, constamment son assiette horizontale quelles que soient l'orientation et l'inclinaison de ladite chaîne dans un plan vertical.
